# FASCICULE DE BREVET EUROPEEN

(11) **EP 0 412 863 B1**
(45) Date de publication et mention de la délivrance du brevet: **15.09.1993**
(21) Numéro de dépôt: 90401969.2
(22) Date de dépôt: 06.07.1990
(51) Int. Cl.: F16F 1/38, B60G 7/02, F16F 3/08

(54) **Articulation élastique notamment pour le montage d'un train roulant de véhicule automobile**
Elastisches Gelenk, insbesondere für die Montage einer Kraftfahrzeugachse
Elastic articulation, especially for the assembly of an axle of a motor vehicle

(30) Priorité: 08.08.1989 FR 8910677
(43) Date de publication de la demande: 13.02.1991
(73) Titulaire: AUTOMOBILES PEUGEOT, 75116 Paris (FR); AUTOMOBILES CITROEN, 92200 Neuilly-sur-Seine (FR)
(72) Inventeur: Robic, Pascal, 35200 Rennes (FR); Le Fol, Marcel, 35410 - Domloup (FR)
(74) Mandataire: Moncheny, Michel

(56) Documents cités:
- EP-A- 0 336 789
- DE-A- 3 831 284
- FR-A- 2 031 658
- FR-A- 2 181 861
- US-A- 3 494 676
- PATENT ABSTRACTS OF JAPAN vol. 8, no. 32 (M-275)(1469) 10 février 1984, & JP-A-58 188719 (NISSAN) 04 novembre 1983,

## Description

La présente invention a pour objet une articulation élastique du type comportant une armature externe cylindrique et une armature interne coaxiale reliées entre elles par un bloc en matériau élastomère et susceptibles de se déplacer l'une par rapport à l'autre.

Un tel type d'articulation élastique est notamment utilisé pour le montage d'un train roulant tel que l'essieu arrière d'un véhicule automobile par rapport à la caisse de ce dernier.

Dans ce dernier type de montage il est courant d'utiliser deux articulations élastiques situées symétriquement de part et d'autre de l'axe longitudinal du véhicule automobile. L'articulation élastique ne doit pas posséder la même raideur élastique selon toutes les directions. Afin d'obtenir un bon filtrage des vibrations transmises par le train roulant à la caisse du véhicule, il est nécessaire que l'articulation présente la raideur la plus faible possible dans le sens longitudinal. La raideur dans le sens vertical doit être compatible avec la charge de la caisse du véhicule que supporte l'articulation.

Par contre la raideur la plus grande possible est nécessaire dans la direction transversale afin d'assurer le guidage transversal du train roulant par rapport à la caisse du véhicule.

Il a déjà été proposé dans le document FR-A-2 031 658 une articulation élastique du type mentionnée au début possédant un rapport de raideur transversale sur raideur longitudinale qui soit plus élevé et dans laquelle il est prévu un pavé de butée qui est agencé entre une portion de l'armature externe et une portion en vis-à-vis de l'armature interne qui sont sensiblement parallèles à l'axe de l'articulation, de manière à travailler en compression pour augmenter la raideur élastique de l'articulation selon une direction de déplacement relatif des armatures sensiblement perpendiculaire à un plan axial de l'articulation et au moins dans le sens correspondant au rapprochement des portions d'armatures, une face plane du pavé de butée coopérant par glissement.

Grâce à l'agencement d'un tel pavé de butée, ou de compression, une articulation élastique de ce type agencée sur la caisse du véhicule, de manière à ce que ladite direction de déplacement relatif soit la direction transversale du véhicule, permet d'accroître la raideur élastique de l'articulation dans cette direction du fait de l'existence du pavé de butée qui est choisi dans un matériau dont la compressibilité est adaptée à la raideur que l'on désire obtenir pour l'articulation selon cette direction.

Toutefois, cette conception n'est pas satisfaisante dans la mesure où le pavé unique ne permet pas d'assurer simultanément et dans de bonnes conditions ses fonctions d'accroissement et la raideur transversale et de glissement.

Afin de remédier à cet inconvénient, l'invention propose une articulation de ce type caractérisée en ce qu'elle comporte deux pavés de butée dont chacun est relié à l'une des deux portions d'armatures et comporte une face plane libre de glissement parallèle audit plan axial et qui coopère par glissement avec la face plane libre de glissement de l'autre pavé.

Selon d'autres exemples d'exécution de l'invention :
- chaque pavé de butée présente une forme sensiblement parallélépipédique rectangle dont l'une des faces rectangulaires constitue ladite face plane libre de glissement et dont la face opposée est reliée à la portion d'armature en vis-à-vis ;
- les portions d'armatures sont des portions cylindriques sensiblement parallèles de l'armature externe et de l'armature interne respectivement ;
- la face rectangulaire opposée du pavé relié à la portion d'armature cylindrique externe présente un profil cylindrique convexe complémentaire de celui de la face en vis-à-vis de cette portion d'armature cylindrique externe, et ladite face opposée du pavé reliée à la portion d'armature cylindrique interne est reçue dans un logement complémentaire formé dans cette portion d'armature cylindrique interne ;
- l'articulation comporte une chambre déformable constituée par une cavité formée dans le bloc en matériau élastomère, agencée entre les deux portions d'armatures et dans laquelle sont agencés les pavés de butée ;
- la cavité est délimitée radialement par deux faces en vis-à-vis respectivement de la portion d'armature interne et de la portion d'armature externe, et latéralement par le matériau élastomère ;
- la cavité est une cavité sensiblement parallélépipédique dont les parois latérales définissent un contour rectangulaire et s'étendent dans des plans perpendiculaires audit plan axial ;
- le bloc en matériau élastomère est fixé par adhérisation à l'armature cylindrique interne ;
- l'articulation comporte une armature cylindrique de renfort dont la surface extérieure est complémentaire de la surface intérieure de l'armature cylindrique externe et sur la surface,intérieure de laquelle est adhérisé le bloc en matériau élastomère, l'armature de renfort comportant un trou entourant latéralement la cavité ;
- le bloc en matériau élastomère muni de son armature de renfort est monté comprimé radialement dans l'armature cylindrique externe et l'étanchéité de la cavité est assurée par un bourrelet périphérique interne venu de matière avec les parois latérales de la cavité au voisinage de la portion de l'armature externe et qui est monté serré entre cette dernière et le bord périphérique du trou de l'armature de renfort ;
- le bloc en matériau élastomère s'étend axialement sur toute la longueur de l'articulation et la cavité est formée au milieu de cette longueur ;
- le bloc en matériau élastomère comporte deux évidements périphériques axiaux débouchants agencés symétriquement de part et d'autre de l'axe de l'articulation de manière à permettre un déplacement relatif des deux armatures dans ledit plan axial ;
- l'articulation comporte une seconde chambre déformable agencée entre deux autres portions de chacune des deux armatures qui sont symétriques des deux portions d'armatures par rapport audit plan axial, cette seconde chambre recevant au moins un pavé de butée de manière à augmenter la raideur élastique de l'articulation dans ladite direction de déplacement relatif et dans les deux sens de déplacement.

Les avantages de l'invention apparaîtront à la lecture de la description détaillée qui va suivre pour la compréhension de laquelle on se reportera aux dessins annexés dans lesquels :
- La figure 1 est une vue latérale schématique illustrant le principe général de montage d'un train arrière par rapport à la caisse d'un véhicule automobile;
- la figure 2 est une vue selon la flèche A de la figure 1 ;
- la figure 3 est une vue montrant l'agencement géométrique d'une articulation élastique en vue du montage du train arrière représenté aux figures 1 et 2 ;
- la figure 4 est une vue en coupe selon la ligne 4-4 de la figure 5, d'une articulation élastique réalisée conformément aux enseignements de l'invention ;
- la figure 5 est une vue en coupe selon la ligne 5-5 de la figure 4 ; et
- la figure 6 est une vue en coupe selon la ligne 6-6 de la figure 4.

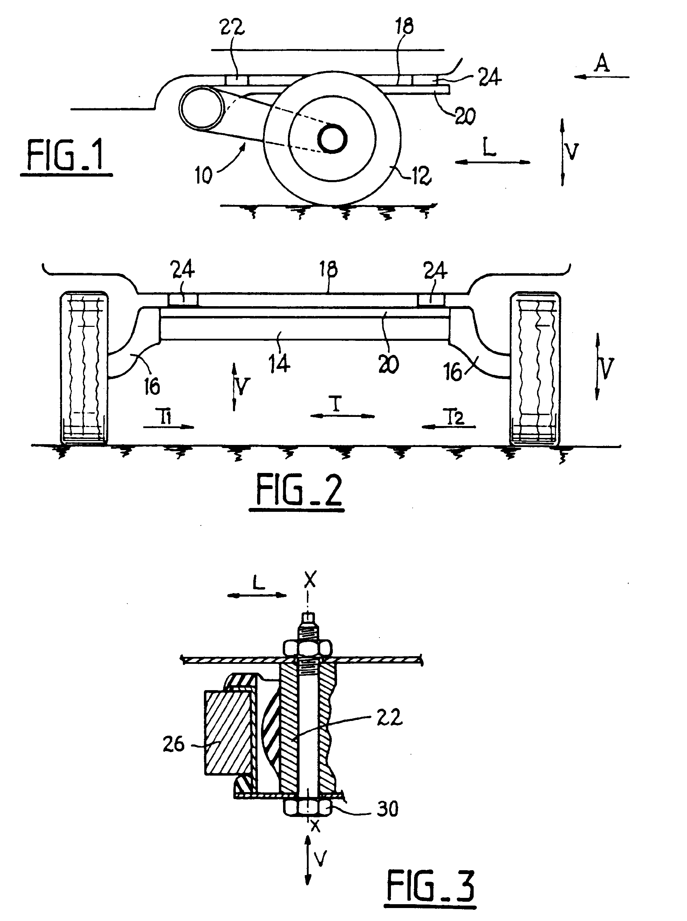

On a représenté aux figures 1 et 2 un train roulant arrière de véhicule automobile comportant notamment des roues 12 reliées à une poutre centrale 14 par des bras latéraux 16. La poutre 14 est reliée à la caisse 18 par une traverse de train arrière 20 avec interposition de deux articulations élastiques 22 et de deux liaisons élastiques 24.

Chaque articulation élastique 22 est soumise à des efforts selon trois directions principales, c'est-à-dire selon la direction verticale V, la direction longitudinale L et la direction transversale T.

Les efforts appliqués selon la direction transversale T correspondent à un déplacement relatif du train roulant 10 par rapport à la caisse 18 du véhicule selon une direction sensiblement parallèle à la direction T, ce déplacement pouvant s'effectuer selon deux sens opposés T1 et T2.

L'articulation élastique 22 comme on peut le constater à la figure 3, présente une forme générale cylindrique circulaire et elle est agencée de manière que son axe longitudinal X-X soit perpendiculaire à la direction longitudinale L du véhicule.

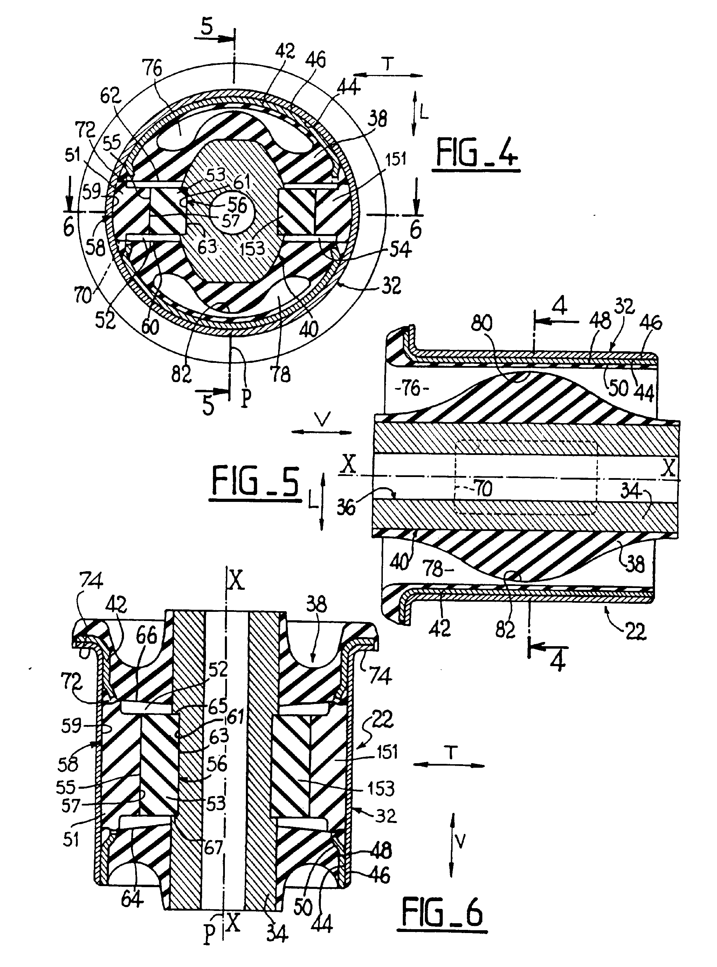

L'articulation élastique 22 représentée aux figures 4 à 6 comprend une armature cylindrique circulaire externe 32 réalisée en tôle et une armature cylindrique interne 34 de section oblongue ou cylindrique et coaxiale, suivant l'axe X-X, à l'armature externe 32.

L'armature interne 34 qui peut être métallique ou réalisée en matière plastique, comporte un alésage interne 36 qui permet son montage, par exemple sur une traverse 26 de la figure 3, au moyen d'une tige axiale de liaison 30.

L'articulation élastique 22 comporte également un bloc en matériau élastomère 38 qui relie entre elles les deux armatures cylindriques 32 et 34.

Le bloc en matériau élastomère 38 s'étend sensiblement sur toute la longueur de l'articulation et est fixé par adhérisation à la surface extérieure 40 de l'armature interne 34 qui l'entoure sur toute sa surface.

L'articulation élastique 22 comporte une armature cylindrique de renfort 42.

La surface extérieure 44 de l'armature de renfort 42 est complémentaire de la surface intérieure 46 de l'armature cylindrique externe 32. La surface intérieure 48 de l'armature de renfort 42 est fixée par adhérisation sur la surface périphérique externe 50 du bloc en matériau élastomère 38.

Le bloc en matériau élastomère 38 muni de son armature cylindrique externe de renfort 42 est monté comprimé à l'intérieur de l'armature cylindrique externe 32.

Le bloc en matériau élastomère 38 comporte deux cavités étanches déformables 52 et 54 qui sont identiques et agencées symétriquement par rapport à un plan axial P passant par l'axe X-X de l'articulation élastique 22 et (qui reçoivent chacune une paire de pavés de butée et de coulissement 51, 53 et 151, 153 respectivement. Les deux chambres 52 et 54 ainsi que les pavés étant identiques on décrira maintenant en détail la chambre 52 et donc la portion de gauche des figures 4 et 6.

La chambre 52 est délimitée radialement vers l'intérieur par une portion 56 de l'armature interne 34, et vers l'extérieur par une portion cylindrique en vis-à-vis 58 de l'armature cylindrique externe 32.

La chambre 52 est une cavité parallélépipédique formée dans le bloc 38 et délimitée latéralement par le bloc en matériau élastomère de façon que ses deux paires de parois latérales 60-62 et 64-66 respectivement définissent un contour de cavité rectangulaire et s'étendent dans des plans sensiblement perpendiculaires au plan axial P.

La cavité 52 s'étend radialement jusqu'à la portion cylindrique d'armature externe 58 grâce à un trou correspondant 70 de contour rectangulaire et qui est formé dans l'armature de renfort 42.

L'étanchéité radiale extérieure de la cavité 52 est assurée au moyen d'un bourrelet périphérique interne 72 venu de matière avec les parois latérales 60-66 de la cavité au voisinage de la portion 58 de l'armature externe 32 et qui est monté serré entre cette dernière et le bord périphérique du trou 70.

Les deux pavés 51 et 53 présentent sensiblement chacun la forme d'un parallélépipède rectangle et sont en contact mutuel par une face plane libre de butée et de glissement, respectivement 55 et 57 qui s'étend parallèlement au plan axial P.

Ces faces de glissement 55 et 57 qui sont en butée l'une contre l'autre sont les faces rectangulaires de plus grandes dimensions des pavés 51 et 53, leurs faces opposées 59 et 61 étant reliées à la portion d'armature en vis-à-vis correspondante 56, 58. La face 59 du pavé de gauche 51 présente un profil cylindrique convexe complémentaire du profil cylindrique interne de la portion d'armature 58 à laquelle il est relié.

Le pavé 53 est maintenu dans la portion d'armature interne 56 grâce à un logement de contour rectangulaire 63 formé dans cette portion d'armature en vis-à-vis.

Le pavé 53 est notamment maintenu parallèlement à la direction de l'axe X-X par les épaulements latéraux 65 et 67 du logement 63. La face 61 du pavé 53 est parallèle à la face de glissement 57 et prend appui dans le fond du logement 63 qui est un fond plat rectangulaire parallèle au plan P.

Les pavés 51 et 53 peuvent être respectivement libres, collés, surmoulés ou encastrés de manière à coopérer chacun avec la portion d'armature correspondante. Dans la position de repos représentée aux figures les blocs ou pavés 51 et 53 peuvent être montés précontraints entre les portions d'armatures 58 et 56. Cette précontrainte permet de rattraper éventuellement les jeux apparaissant du fait de l'usure des pavés lors du glissement réciproque des surfaces 55 et 57.

Les pavés peuvent par exemple être réalisés dans un matériau possédant de bonnes caractéristiques de glissement tel que du polyacétal ou un polyamide. Le matériau doit par contre posséder de très bonnes propriétés de résistance à la compression selon la direction correspondant à l'épaisseur des pavés, c'est-à-dire selon la direction T en considérant les figures, de façon à conférer une très grande raideur élastique selon cette direction de déplacement réciproque des armatures 32 et 34. Les faces des portions d'armatures 56 et 58 en vis-à-vis des faces 61 et 59 des pavés 53 et 51 constituent à cet effet des faces planes de butée pour comprimer les pavés.

Outre son caractère déformable, la cavité 52 aménagée dans le bloc en matériau élastomère 38 est une chambre étanche qui permet de prévoir un agent de lubrification des surfaces de glissement 55 et 57.

Lorsque l'articulation élastique 22 représentée aux figures 4 à 6 est utilisée pour le montage d'un train roulant de véhicule automobile, elle doit être disposée, comme cela est indiqué aux figures, de manière que la direction transversale T du véhicule soit perpendiculaire au plan axial P de l'articulation.

La raideur élastique de l'articulation élastique suivant la direction T est très fortement augmentée du fait de l'agencement des pavés 51, 53 et 151, 153 dans les chambres 52 et 54 qui s'opposent aux déplacements relatifs de l'armature interne 34 par rapport à l'armature externe cylindrique 32 selon une direction perpendiculaire au plan axial P et ceci de manière symétrique dans les deux sens de déplacement T1 et T2.

Au contraire lorsque l'armature interne 34 est sollicitée longitudinalement, c'est-à-dire parallèlement à la direction L, par rapport à l'armature cylindrique externe 32, les chambres 52 et 54 se déforment aisément et les pavés glissent les uns par rapport aux autres le long de leur face de glissement correspondante.

Afin d'éviter que le bloc en matériau élastomère 38 et son armature de renfort 42 ne bougent axialement par rapport à l'armature cylindrique externe 32, cette dernière comporte à une de ses extrémités un bord radial replié par emboutissage 74.

Le bloc en matériau élastomère 38 comporte également deux évidements périphériques axiaux 76 et 78 agencés symétriquement de part et d'autre de l'axe X-X de l'articulation 22 de manière à permettre un déplacement relatif des deux armatures 32 et 34 dans le plan axial P c'est-à-dire parallèlement à la direction verticale V et L.

Comme on peut le constater à la figure 5, chaque évidement axial 76, 78 possède un profil interne en creux, c'est-à-dire que le bloc en matériau élastomère possède deux bossages sphériques convexes symétriques 80 et 82 respectivement, qui limitent les débattements de l'armature cylindrique interne dans le plan axial P par rapport à l'armature cylindrique externe 32.

La réalisation des articulations élastiques 22, afin d'assurer un éventuel remplissage des chambres 52 et 54 par un agent de lubrification, peut être effectuée en immersion dans un bain de cet agent.

Le montage de l'articulation élastique 22 dans le boîtier 28 est effectué de manière à ce que son armature cylindrique externe 32 soit montée serrée dans l'alésage 30 et ceci de façon à ce que son plan axial P demeure toujours dans un plan sensiblement parallèle à la direction verticale V du véhicule.

De nombreuses variantes de l'invention sont possibles. Elles concernent notamment le mode de liaison des pavés aux portions d'armatures correspondantes.

De même les pavés peuvent ne pas être réalisés sous forme d'éléments indépendants mais par exemple sous forme de films épais collés sur les portions d'armatures. Le matériau des pavés pourrait également être moulé sur ces portions d'armatures.

## Revendications

1. Articulation élastique (22) du type comportant une armature externe cylindrique (32) et une armature interne (34) coaxiale reliées entre elles par un bloc en matériau élastomère (38) et susceptibles de se déplacer l'une par rapport à l'autre, ainsi qu'au moins un pavé de butée (51, 53, 151, 153) qui est agencé entre une portion (58) de l'armature externe (32) et une portion en vis-à-vis (56) de l'armature interne (34) sensiblement parallèles à l'axe de l'articulation, de manière à travailler en compression pour augmenter la raideur élastique de l'articulation selon une direction (T) de déplacement relatif des armatures (34, 32) sensiblement perpendiculaire à un plan axial (P) de l'articulation et au moins dans le sens correspondant au rapprochement des portions d'armatures (56, 58), caractérisée en ce qu'elle comporte deux pavés de butée (51, 53) dont chacun est relié à l'une des deux portions d'armatures (58, 56) et comporte une face plane libre de glissement (55, 57) parallèle audit plan axial (P) et qui coopère par glissement avec la face plane libre de glissement (57, 55) de l'autre pavé.

2. Articulation élastique selon la revendication 1, caractérisée en ce que chaque pavé de butée (51, 53) présente une forme sensiblement parallélépipédique rectangle dont l'une des faces rectangulaires (55, 57) constitue ladite face plane libre de glissement et dont la face opposée (59, 61) est reliée à la portion d'armature en vis-à-vis.

3. Articulation élastique selon l'une quelconque des revendications précédentes, caractérisée en ce que les portions d'armatures (58, 56) sont des portions cylindriques sensiblement parallèles de l'armature externe et de l'armature interne respectivement.

4. Articulation élastique selon les revendications 2, et 3, caractérisée en ce que ladite face rectangulaire opposée (59) du pavé (51) relié à la portion d'armature cylindrique externe (58) présente un profil cylindrique convexe complémentaire de celui de la face en vis-à-vis de cette portion d'armature cylindrique externe, et en ce que ladite face opposée (61) du pavé relié à la portion d'armature cylindrique interne (56) est reçue dans un logement complémentaire (63) formé dans cette portion d'armature cylindrique interne.

5. Articulation élastique selon l'une quelconque des revendications précédentes, caractérisée en ce qu'elle comporte une chambre déformable constituée par une cavité (52) formée dans le bloc en matériau élastomères, agencée entre lesdites deux portions d'armatures (56, 58) et dans laquelle sont agencés les pavés de butée.

6. Articulation élastique selon la revendication 5, caractérisée en ce que la cavité (52) est délimitée radialement par deux faces en vis-à-vis respectivement de la portion (56) de l'armature interne et de la portion (58) de l'armature externe, et latéralement par le matériau élastomère.

7. Articulation élastique selon la revendication 6, caractérisée en ce que la cavité (52) est une cavité sensiblement parallélépipédique dont les parois latérales (60-66) définissent un contour rectangulaire et s'étendent dans des plans perpendiculaires audit plan axial (P).

8. Articulation élastique selon l'une des revendications précédentes, caractérisée en ce que le bloc en matériau élastomère (38) est fixé par adhérisation à l'armature cylindrique interne (34).

9. Articulation élastique selon la revendication 8 prise en combinaison avec l'une des revendications 6 ou 7, caractérisée en ce qu'elle comporte une armature cylindrique de renfort (42) dont la surface extérieure (44) est complémentaire de la surface intérieure (46) de l'armature cylindrique externe (32) et sur la surface intérieure (48) de laquelle est adhérisé le bloc en matériau élastomère (38), et en ce que l'armature de renfort (42) comporte un trou (70) entourant latéralement la cavité (52).

10. Articulation élastique selon la revendication 9, caractérisée en ce que le bloc en matériau élastomère (38) muni de son armature de renfort (42) est monté comprimé radialement dans l'armature cylindrique externe (32), et en ce que l'étanchéité de la cavité (52) est assurée par un bourrelet périphérique interne (72) venu de matière avec les parois latérales (60-66) de la cavité (52) au voisinage de la portion (58) de l'armature externe (32) et qui est monté serré entre cette dernière et le bord périphérique du trou (70) de l'armature de renfort.

11. Articulation élastique selon l'une quelconque des revendications 5 à 10, caractérisée en ce que le bloc en matériau élastomère (38) s'étend axialement sur toute la longueur de l'articulation, et en ce que la cavité (52) est formée au milieu de ladite longueur.

12. Articulation élastique selon l'une quelconque des revendications 5 à 11, caractérisée en ce que le bloc en matériau élastomère (38) comporte deux évidements périphériques axiaux débouchants (76, 78) agencés symétriquement de part et d'autre de l'axe (X-X) de l'articulation de manière à permettre un déplacement relatif des deux armatures (32, 34) dans ledit plan axial (P).

13. Articulation élastique selon l'une quelconque des revendications 6 à 12, caractérisée en ce qu'elle comporte une seconde chambre (54) déformable agencée entre deux autres portions de chacune des deux armatures (32, 34) qui sont symétriques desdites deux portions d'armatures (56, 58) par rapport audit plan axial (P), cette seconde chambre recevant au moins un pavé de butée (151, 153) de manière à augmenter la raideur élastique de l'articulation dans ladite direction (T) de déplacement relatif et dans les deux sens de déplacement.

## Patentansprüche

1. Elastisches Gelenk (22) mit einer zylindrischen äußeren Armatur (32) und einer koaxialen inneren Armatur (34), die miteinander durch einen Block (38) aus elastomerem Material verbunden und relativ zueinander beweglich sind, sowie mit wenigstens einem Lagerblock (51,53,151,153), der zwischen einem Teil (58) des äußeren Beschlages (32) und einem gegenüberliegenden Teil (56) des inneren Beschlages (34) im wesentlichen parallel zur Gelenkachse angeordnet ist, derart, daß er auf Druck beansprucht wYd, um die elastische Steifheit des Gelenks längs einer Achse (T) der Relativbewegung der Beschläge (34,32) im wesentlichen rechtwinklig zu einer axialen Ebene (P) des Gelenks und zumindest in der Richtung entsprechend einer Annäherung der Beschlagteile (56,58) zu erhöhen, dadurch **gekennzeichnet,** daß es zwei Lagerblöcke (51,53) aufweist, deren jedes mit einem der beiden Beschlagteile (58,56) verbunden ist und eine freie ebene Gleitfläche (55,57) parallel zu der genannten axialen Ebene (P) aufweist, die gleitend mit der freien ebenen Gleitfläche (57,55) des anderen Blockes zusammenwirkt.

2. Elastisches Gelenk nach Anspruch 1, dadurch **gekennzeichnet,** daß jeder Lagerblock (51,53) im wesentlichen die Form eines Quaders hat, bei dem eine der rechteckigen Flächen (55,57) die genannte freie ebene Gleitfläche bildet und die entgegengesetzte Fläche (59,61) mit dem gegenüberliegenden Beschlagteil verbunden ist.

3. Elastisches Gelenk nach einem der vorstehenden Ansprüche, dadurch **gekennzeichnet,** daß die Beschlagteile (58,56) zylindrische Teile sind, die im wesentlichen parallel zu dem äußeren bzw. inneren Beschlag angeordnet sind.

4. Elastisches Gelenk nach den Ansprüchen 2 und 3, dadurch **gekennzeichnet,** daß die genannte entgegengesetzte rechteckige Fläche (59) des mit dem zylindrischen äußeren Beschlagteil (58) verbundenen Blockes (51) ein konvexes zylindrisches Profil komplementär zu demjenigen der gegenüberliegenden Fläche dieses äußeren zylindrischen Beschlagteils aufweist, und die genannte entgegengesetzte Fläche (61) des mit dem zylindrischen inneren Beschlagteil (56) verbundenen Blockes in einem komplementären Sitz (63) aufgenommen ist, der in diesem zylindrischen inneren Beschlagteil ausgebildet ist.

5. Elastisches Gelenk nach einem der vorstehenden Ansprüche, dadurch **gekennzeichnet,** daß das Gelenk eine verformbare Kammer aufweist, die durch einen in dem zwischen den beiden Beschlagteilen angeordneten Block aus elastomerem Material ausgebildeten Hohlraum (52) gebildet wird, und in dem die Lagerblöcke angeordnet sind.

6. Elastisches Gelenk nach Anspruch 5, dadurch **gekennzeichnet,** daß der Hohlraum (52) radial durch zwei gegenüberliegende Flächen des Inneren bzw. äußeren Beschlagteils (56,58) und seitlich durch das elastomere Material begrenzt wird.

7. Elastisches Gelenk nach Anspruch 6, dadurch **gekennzeichnet,** daß der Hohlraum (52) im wesentlichen die Form eines Parallelflachs hat, dessen seitliche Wände (60-66) eine rechteckige Kontur bilden und sich in zu der genannten axialen Ebene (P) rechtwinkligen Ebenen erstrecken.

8. Elastisches Gelenk nach einem der vorstehenden Ansprüche, dadurch **gekennzeichnet,** daß der Block (38) aus elastomerem Material haftend an dem zylindrischen inneren Beschlag (34) befestigt ist.

9. Elastisches Gelenk nach Anspruch 8 in Kombination mit Anspruch 6 oder 7, dadurch **gekennzeichnet,** daß das Gelenk eine zylindrische Verstärkungsarmatur (42) aufweist, deren äußere Oberfläche (44) zu der inneren Oberfläche (46) des äußeren zylindrischen Beschlages (32) komplementär ist und an dessen innerer Oberfläche (48) der Block (38) aus elastomerem Material haftet, wobei die Verstärkungsarmatur eine den Hohlraum (52) seitlich umgebende Öffnung (70) aufweist.

10. Elastisches Gelenk nach Anspruch 9, dadurch **gekennzeichnet,** daß der mit seiner Verstärkungsarmatur (42) versehene Block (38) aus elastomerem Material unter radialer Kompression in dem zylindrischen äußeren Beschlag (32) montiert ist, und die Dichtheit des Hohlraums (52) sichergestellt wird durch einen umlaufenden inneren Wulst (72), der in einem Stück mit den seitlichen Wänden (60-66) des Hohlraums (52) in der Nähe des äußeren Beschlagteils (58) ausgebildet ist und der klemmend zwischen diesem letzteren und dem Umfangsrand der Öffnung (70) der Verstärkungsarmatur montiert ist.

11. Elastisches Gelenk nach einem der Ansprüche 5 bis 10, dadurch **gekennzeichnet,** daß der Block (38) aus elastomerem Material sich axial auf der gesamten Länge des Gelenks erstreckt und der Hohlraum (52) in der Mitte dieser Länge ausgebildet ist.

12. Elastisches Gelenk nach einem der Ansprüche 5 bis 11, dadurch **gekennzeichnet,** daß der Block (38) aus elastomerem Material an seinem Umfang offene axiale Ausnehmungen (76,78) aufweist, die derart symmetrisch beiderseits der Gelenkachse (X-X) angeordnet sind, daß sie eine Relativbewegung der beiden Beschläge (32,34) in der genannten axialen Ebene (P) gestatten.

13. Elastisches Gelenk nach einem der Ansprüche 6 bis 12, dadurch **gekennzeichnet,** daß das Gelenk eine zweite verformbare Kammer (54) aufweist, die zwischen zwei anderen Teilen jedes der beiden Beschläge (32,34) ausgebildet ist, die zu den beiden Beschlagteilen (56,58) in bezug auf die genannte axiale Ebene (P) symmetrisch sind, wobei diese zweite Kammer wenigstens einen Lagerblock (151,153) derart aufnimmt, daß die elastische Steifheit des Gelenks längs der Achse (T) der genannten Relativbewegung und in beiden Bewegungsrichtungen erhöht wird.

## Claims

1. Elastic articulation (22) of the type comprising an outer cylindrical armature (32) and a coaxial inner armature (34) connected to one another by a block of elastomeric material (38) and capable of moving relative to one another, as well as at least one abutment block (51,53, 151,153) which is arranged between a portion (58) of the outer armature (32) and an opposing portion (56) of the inner armature (34) which are substantially parallel to the axis of the articulation, so as to work in compression in order to increase the elastic rigidity of the articulation in one direction (T) of relative displacement of the armatures (34,32) which is substantially perpendicular to an axial plane (P) of the articulation and at least in the direction corresponding to the moving together of the armature portions (56,58), characterised in that it comprises two abutment blocks (51,53) each of which is connected to one of the two armature portions (58,56) and has a free planar sliding surface (55,57) parallel to said axial plane (P) and cooperating by sliding with the free planar sliding surface (57,55) of the other block.

2. Elastic articulation according to claim 1, characterised in that each abutment block (51,53) is of substantially rectangular parallelepipedic form, one of the rectangular faces (55,57) of which constitutes said free planar sliding surface whilst the opposite face (59,61) is connected to the opposing armature portion.

3. Elastic articulation according to either of the preceding claims, characterised in that the armature portions (58, 56) are substantially parallel cylindrical portions of the outer armature and inner armature, respectively.

4. Elastic articulation according to claims 2 and 3, characterised in that said opposing rectangular face (59) of the block (51) connected to the outer cylindrical armature portion (58) has a convex cylindrical profile which is complementary to that of the opposing face of said outer cylindrical armature portion, and in that said opposite face (61) of the block connected to the inner cylindrical armature portion (56) is accommodated in a complementary recess (63) formed in this inner cylindrical armature portion.

5. Elastic articulation according to any one of the preceding claims, characterised in that it has a deformable chamber consisting of a cavity (52) formed in the block of elastomeric material, arranged between said two armature portions (56,58) and in which the abutment blocks are arranged.

6. Elastic articulation according to claim 5, characterised in that the cavity (52) is radially defined by two faces which respectively oppose the portion (56) of the inner armature and the portion (58) of the outer armature and the cavity (52) is laterally defined by the elastomeric material.

7. Elastic articulation according to claim 6, characterised in that the cavity (52) is a substantially parallelepipedic cavity the lateral walls (60-66) of which define a rectangular contour and extend in planes perpendicular to said axial plane (P).

8. Elastic articulation according to one of the preceding claims, characterised in that the block of elastomeric material (38) is fixed by adhesive bonding to the inner cylindrical armature (34).

9. Elastic articulation according to claim 8 when combined with one of claims 6 and 7, characterised in that it comprises a cylindrical reinforcing armature (42) the outer surface (44) of which is complementary to the inner surface (46) of the outer cylindrical armature (32) and on the inner surface (48) of which is bonded the block of elastomeric material (38), and in that the reinforcing armature (42) has a hole (70) which laterally surrounds the cavity (52).

10. Elastic articulation according to claim 9, characterised in that the block of elastomeric material (38) provided with its reinforcing armature (42) is mounted in radially compressed fashion in the outer cylindrical armature (32) and in that the cavity (52) is sealed by means of an inner peripheral bead (72) made of the same material as the side walls (60-66) of the cavity (52) in the vicinity of the portion (58) of the outer armature (32), which is mounted clamped between the latter and the peripheral edge of the hole (70) of the reinforcing armature.

11. Elastic articulation according to any of claims 5 to 10, characterised in that the block of elastomeric material (38) extends axially over the entire length of the articulation, and in that the cavity (52) is formed half way along said length.

12. Elastic articulation according to any one of claims 5 to 11, characterised in that the block of elastomeric material (38) comprises two open-ended axial peripheral recesses (76,78) provided symmetrically on each side of the axis (X-X) of the articulation in order to allow relative displacement of the two armatures (32,34) in said axial plane (P).

13. Elastic articulation according to any one of claims 6 to 12, characterised in that it has a second deformable chamber (54) arranged between two other portions of each of the two armatures (32,34) which are symmetrical to said two armature portions (56,58) relative to said axial plane (P), said second chamber receiving at least one abutment block (151,153) so as to increase the elastic rigidity of the articulation in said direction (T) of relative displacement and in both directions of displacement.
